# EUROPÄISCHE PATENTSCHRIFT

(11) **EP 3 517 494 B1**
(45) Veröffentlichungstag und Bekanntmachung des Hinweises auf die Patenterteilung: **22.02.2023**
(21) Anmeldenummer: 19157802.0
(22) Anmeldetag: 12.01.2017
(51) Int. Cl.: B67D 7/02, B67D 1/00, B67D 1/04

(54) **SYSTEM, KARTUSCHE, GETRÄNKEZUBEREITUNGSEINHEIT UND VERFAHREN ZUR HERSTELLUNG EINES GETRÄNKS**
SYSTEM, CARTRIDGE, DRINK PREPARATION UNIT AND METHOD FOR PREPARING A BEVERAGE
SYSTÈME, CARTOUCHE, UNITÉ DE PRÉPARATION DES BOISSONS ET PROCÉDÉ DE PRODUCTION D'UNE BOISSON

(30) Priorität: 12.01.2016 DE 102016200254; 01.07.2016 DE 102016212012; 01.07.2016 DE 102016212013; 27.09.2016 DE 102016218509; 27.09.2016 DE 102016218507; 29.09.2016 DE 102016218884
(43) Veröffentlichungstag der Anmeldung: 31.07.2019
(62) Teilanmeldung aus: 17700342.3
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH)
(74) Vertreter: Loock, Jan Pieter

(56) Entgegenhaltungen:
- WO-A2-2005/079361
- WO-A2-2013/036564

## Beschreibung

### Stand der Technik

Die vorliegende Erfindung geht aus von einem System zur Herstellung eines Getränks, insbesondere eines Kaltgetränks, aufweisend eine Kartusche, die ein mit einer Getränkesubstanz gefülltes Reservoir aufweist, und eine Getränkezubereitungseinheit mit einer Kartuschenaufnahme, in welche die Kartusche reversibel einsetzbar ist, und mit einer Kartuschenentladeeinrichtung, welche ein zumindest teilweises Überführen der Getränkesubstanz vom Reservoir in eine Mischkammer bewirkt.

Solche Systeme sind aus dem Stand der Technik, beispielsweise aus WO 2013/036564 A2 und WO 2005/079361 A2, grundsätzlich bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche einsetzen und einen Startknopf drücken muss. Die Getränkezubereitungseinheit übernimmt dann vollautomatisiert die Erzeugung desselben, das heißt insbesondere, dass die Getränkesubstanz mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Eine große Herausforderung bei solchen Systemen ist, während der Herstellung des Getränks eine Rückkontamination der Getränkezubereitungseinheit sicher und vollständig zu unterbinden, da andernfalls die Gefahr einer Verunreinigung bis hin zur Schimmelpilzbildung innerhalb der Getränkezubereitungseinheit besteht. Dies gilt insbesondere für Kartuschen die fruchtzuckerhaltige, alkoholhaltige oder milchhaltige Getränkesubstanzen beinhalten.

Bei aus dem Stand der Technik bekannten Systemen wird üblicherweise die Kartusche in die Kartuschenaufnahme eingesetzt und die Kartusche auf beiden Seiten, d.h. auf einer Einlassseite und auf einer Auslassseite geöffnet. Auf der Einlassseite wird sodann mittels einer Fluidzuführung Wasser in die Kartusche eingeleitet, so dass sich das Getränk durch Vermischen der Getränkesubstanz mit dem Wasser schon innerhalb des Reservoirs in der Kartusche bildet. Auf der Auslassseite verlässt das Getränk die Kartusche und wird zu einem Trinkgefäß geleitet. Das Wasser durchströmt das Reservoir hierbei vollständig und bewirkt somit ein Ausleiten der Getränkesubstanz aus dem Reservoir. Es hat sich gezeigt, dass beim Einleiten des Wassers direkt in das mit der Getränkesubstanz gefüllte Reservoir eine Rückkontamination der Zuführung nicht vollständig verhindert werden kann, weil das Reservoir üblicherweise vollständig mit der Getränkesubstanz gefüllt ist und dadurch beim Einleiten des Wassers ein Druckanstieg im Reservoir stattfindet. Sowohl dieser Druckanstieg im Reservoir als auch das Durchspülen des Reservoirs sorgt dafür, dass während und/oder kurz nach der Getränkeherstellung kleinste Tropfen, Partikel und/oder Schwebestoffe der Getränkesubstanz in die Fluidzuführung gelangen und dort zu einer kontinuierlichen Verunreinigung führen.

### Offenbarung der Erfindung

Es ist daher eine Aufgabe der vorliegenden Erfindung ein System zur Herstellung eines Getränks der eingangs genannten Art zur Verfügung zu stellen, bei welchem eine Rückkontamination der Getränkezubereitungseinheit wirksam vermieden wird und welches möglichst einfach und kostengünstig zu realisieren ist.

Diese Aufgabe wird durch ein System zur Herstellung eines Getränks, insbesondere eines Kaltgetränks, gemäß Anspruch 1 gelöst.

Das erfindungsgemäße System hat gegenüber dem Stand der Technik den Vorteil, dass die Fluidzuführung nicht in das Reservoir der Kartusche, sondern in die Mischkammer mündet. Hierdurch wird wirksam und in einer einfach und kostengünstig zu realisierenden Weise verhindert, dass sich im Reservoir ein übermäßig großer oder überhaupt ein Überdruck aufbaut. Auch wird das Reservoir nicht von dem Fluid (vollständig) durchspült, sondern das System ist derart ausgebildet, dass die Getränkesubstanz und das Fluid getrennt voneinander in die Mischkammer gelangen. Das Fluid gelangt demnach unabhängig vom Reservoir in die Mischkammer. Man könnte auch sagen, dass das Reservoir von der Fluidzuführung "gebypasst" wird. Es hat sich gezeigt, dass hierdurch eine Rückkontamination der Getränkezubereitungseinheit in einer im Vergleich zum Stand der Technik deutlich wirksameren Art und Weise unterbunden wird.

Ferner wird offenbart ein System zur Herstellung eines Getränks, insbesondere eines Kaltgetränks, aufweisend eine Kartusche, die ein mit einer Getränkesubstanz gefülltes Reservoir aufweist, und eine Getränkezubereitungseinheit mit einer Kartuschenaufnahme, in welche die Kartusche reversibel einsetzbar ist, und einer Kartuschenentladeeinrichtung, welche ein zumindest teilweises Überführen der Getränkesubstanz vom Reservoir in eine Mischkammer bewirkt, wobei das System einen beweglichen Kolben aufweist, welcher innerhalb des Reservoirs angeordnet ist und mittels der Kartuschenentladeeinrichtung von einer Ausgangsposition in eine Endposition überführbar ist.

Es wird zum Überführen der Getränkesubstanz von dem Reservoir in die Mischkammer die Kartuschenentladeeinrichtung in Form des beweglichen Kolbens verwendet, indem der Kolben von der Ausgangsposition in die Endposition überführt wird. Das erfindungsgemäße System hat gegenüber dem Stand der Technik den Vorteil, dass das Fluid, welches zur Erzeugung des Getränks eingeleitet und mit der Getränkesubstanz vermischt wird, nicht wie beim Stand der Technik auch zum Überführen der Getränkesubstanz verwendet wird. Auf diese Weise wird die Gefahr der Rückkontamination der Getränkezubereitungseinheit und insbesondere der Fluidzuführung ausgeräumt. Insbesondere, ist der bewegliche Kolben Teil der Kartusche, so dass zum Überführen der Getränkesubstanz in die Mischkammer keine Teile der Getränkezubereitungseinheit mit der Getränkesubstanz überhaupt in Kontakt kommen.

Dabei kann vorgesehen werden, dass der Kolben in der Ausgangsposition nahe der Eingangsseite angeordnet ist und wobei der Kolben in der Endposition in Richtung der Ausgangsseite verschoben ist. Auf diese Weise lässt sich nahezu die komplette Menge der Getränkesubstanz durch Verschieben des Kolbens von der Ausgangsposition in die Endposition aus dem Reservoir drücken. Der Kolben ist dabei vorzugsweise als Teil der Kartusche dauerhaft im Reservoir angeordnet. Alternativ wäre natürlich auch denkbar, dass der Kolben als Teil der Kartuschenentladeeinrichtung in das Reservoir einführbar ist, nachdem die Kartusche in die Getränkezubereitungseinheit eingesetzt wurde. Das Reservoir umfasst vorzugsweise einen durch eine zylinderförmige Wandung begrenzten Hohlraum, wobei der Kolben eine kreisrunde Außenkontur umfasst, deren Außendurchmesser ungefähr dem Innendurchmesser der zylinderförmigen Wandung entspricht oder nur geringfügig kleiner ist. Vorzugsweise umfasst der Kolben eine Dichteinrichtung, insbesondere in Form einer flexiblen umlaufenden Dichtlippe, welche einen schmalen Spalt (ergibt sich aus der Differenz zwischen Innendurchmesser der zylinderförmigen Wandung und dem Außendurchmesser des Kolbens) zwischen einer Wandung des Reservoirs und dem Kolben abdichtet. Denkbar ist, dass die Dichtlippe aus einem reversibel elastischen Material gefertigt ist, wodurch sich die Dichtlippe dichtend an die Innenseite der Wandung anschmiegt. Beispielsweise umfasst die Dichtlippe einen Elastomer, Kautschuk, Neopren, Gummi, Polyurethan, Weich-PVC (Polyvinylchlorid mit bis zu 40%-Weichmacher) oder dergleichen.

Weiters könnte auch vorgesehen werden, dass die Kartuschenentladeeinrichtung einen bewegbaren Stößel umfasst, der auf einer Eingangsseite der Kartusche in die Kartusche einführbar ist, um die Getränkesubstanz auf einer Ausgangsseite der Kartusche aus der Kartusche zu pressen. Vorzugsweise ist dabei das kartuschenseitige Ende des Stößels zum Zusammenwirken mit dem in der Kartusche angeordneten Kolben derart vorgesehen ist, dass beim Einführen des Stößels in die Kartusche der Stößel auf den in der Ausgangsposition befindlichen Kolben trifft und sodann von dem Stößel in die Endposition verschoben wird. In vorteilhafter Weise wird somit die Getränkesubstanz aus dem Reservoir in die Mischkammer überführt, ohne dass der Stößel in Kontakt mit der Getränkesubstanz gelangt. Der Stößel kann somit Teil der Getränkezubereitungseinheit sein und wieder verwendet werden, während der verunreinigte Kolben Teil der Kartusche ist und beim Wechsel der Kartusche somit ausgetauscht wird. Eine Rückkontamination der Getränkezubereitungseinheit wird somit wirksam verhindert. Vor der Entnahme der verbrauchten Kartusche aus der Getränkezubereitungseinheit wird der Stößel insbesondere zurück und aus der Kartusche wieder herausgezogen.

Alternativ wäre im Prinzip auch denkbar, dass das kartuschenseitige Ende des Stößels den Kolben aufweist. In diesem Fall wäre der Kolben Teil der Getränkezubereitungseinheit und nicht der Kartusche. Diese Lösung ist wegen der Gefahr einer Rückkontamination allerdings weniger bevorzugt. Im Gegenzug ist diese Lösung aber kostengünstiger zur realisieren, da der Kolben hier kein Wegwerfprodukt darstellt.

Die Kartusche kann im Bereich der einführseite ein Dichtelement aufweisen, welches durch das Einführen des Kolbens geöffnet wird, wobei insbesondere das Dichtelement eine Dichtfolie umfasst, die beim Einführen des Kolbens einreist. Das Dichtelement sorgt vorzugsweise dafür, dass das Reservoir zumindest vor dem Einsetzen in die Getränkezubereitungseinheit hermetisch abgedichtet ist, keine Getränkesubstanz entweichen kann und das Aroma der Getränkesubstanz während der Lagerung und des Transports der Kartusche erhalten bleibt. Vorzugsweise ist die Dichtfolie derart angeordnet, dass der Kolben in der Ausgangsposition zwischen dem Dichtelement und der Getränkesubstanz angeordnet ist, so dass die Dichtfolie beim Einführen des Stößels vom Stößel zerrissen wird. Die Kartusche wird vorzugsweise auf ihrer Eingangsseite durch das Einführen des Stößels automatisch geöffnet. Alternativ wäre auch denkbar, dass die Dichtfolie zwischen dem in der Ausgangsposition angeordneten Kolben und der Getränkesubstanz angeordnet ist, so dass die Dichtfolie beim Einführen des Stößels von dem sich bewegenden Kolben zerrissen wird.

Auch könnte vorgesehen werden, dass die Getränkezubereitungseinheit eine Führungseinheit zur motorgetriebenen Zuführung des Stößels in die Kartusche aufweist, wobei die Führungseinheit den Stößel ein geradliniges oder gekrümmtes Führungselement zum Einführen des Stößels umfasst und wobei die Führungseinheit einen elektrischen Linearmotor aufweist. In vorteilhafter Weise kann somit der Stößel motorgetrieben in die Kartusche eingeführt werden. Der Anwender braucht in diesem Fall das Einführen lediglich durch einen Knopfdruck oder dergleichen auslösen. Die Verwendung eines gekrümmten Führungselements hat den Vorteil, dass die Bauhöhe der Führungseinheit reduziert werden kann. Der Stößel ist in diesem Fall vorzugsweise flexibel ausgeführt. Ansonsten ist er insbesondere starr oder halbstarr ausgebildet. Der elektrische Linearmotor umfasst vorzugsweise ein Ritzel, das auf einer Antriebswelle eines Elektromotors (beispielsweise eine Drehstrom-Asynchronmaschine oder eine Drehstrom-Synchronmaschine) sitzt, und in eine Zahnstange eingreift, wobei die Zahnstange mit dem Stößel gekoppelt ist oder bereits Teil des Stößels ist. Durch Drehen des Ritzels wird die Zahnstange bewegt und somit der Stößel in die Kartusche gefahren oder aus der Kartusche heraus bewegt. Alternativ ist auch denkbar, dass der vorgenannte elektrische Antrieb einen elektromotorischen Spindelantrieb umfasst, bei welchem eine Spindel mittels eines Ritzels translatorisch bewegt wird, wobei die Spindel mit dem Stößel gekoppelt ist oder bereits Teil des Stößels ist. Alternativ umfasst der elektrische Linearmotor einen Solenoid-Linearmotor. Der Fachmann erkennt, dass anstelle des elektrischen Linearmotors auch ein hydraulischer Linearmotor verwendet werden könnte.

Es ist vorgesehen, dass die Kartuschenentladeeinrichtung eine Druckluftquelle zum Einblasen von Druckluft in das Reservoir auf einer Eingangsseite der Kartusche umfasst, wobei das System insbesondere derart ausgebildet ist, dass durch die Druckluft die Getränkesubstanz direkt aus dem Reservoir gedrückt wird oder dass durch die Druckluft der Kolben von der Ausgangsposition in die Endposition überführt wird. Anstelle der vorstehend genannten Lösung mit einem elektrischen oder hydraulischen Linearmotor ist also auch denkbar, die Getränkesubstanz direkt mittels Druckluft aus dem Reservoir in die Mischkammer zu drücken (die Druckluft wird hierbei auf der Eingangsseite direkt in das nicht mit einem Kolben versehene Reservoir eingeleitet) oder indirekt hierfür den Kolben mittels Druckluft von der Ausgangsposition in die Endposition zu überführen (hierbei wird die Druckluft auf der Eingangsseite in das Reservoir und zwar oberhalb des Kolbens eingeleitet). In vorteilhafter Weise wird bei beiden Varianten durch die Verwendung von Druckluft (insbesondere anstelle des Stößels) die Gefahr von Rückkontaminationen am allermeisten reduziert. Denkbar ist, dass die Getränkezubereitungseinheit hierbei mit einer Druckluftpatrone ausgestattet ist, die bei Bedarf gewechselt wird. Alternativ wäre auch denkbar, dass die Getränkezubereitungseinheit zur Bereitstellung von Druckluft mit einem entsprechenden Kompressor ausgestattet ist. Im Falle, dass die Getränkezubereitungseinheit ohnehin einen Karbonisierer aufweist, der eine CO₂-Patrone umfasst, wird vorzugsweise diese CO₂-Patrone gleichzeitig auch als Druckluftquelle für die Kartuschenentladeeinrichtung benutzt.

Alternativ zur Verwendung von Druckluft ist auch die Verwendung von Unterdruck denkbar. Bei dieser alternativen Ausführungsform weist die Kartuschenentladeeinrichtung eine Unterdruckvorrichtung zum Aussaugen der Getränkesubstanz aus dem Reservoir mittels Unterdruck auf, wobei das System insbesondere derart ausgebildet ist, dass durch den Unterdruck die Getränkesubstanz direkt aus dem Reservoir gesaugt wird oder dass durch den Unterdruck der Kolben von der Ausgangsposition in die Endposition überführt wird.

Es kann vorgesehen werden, dass die Mischkammer einen Getränkeauslauf aufweist, durch welchen das aus einer Vermischung der Getränkesubstanz mit dem Fluid gebildete Getränk abgegeben wird, wobei das System vorzugsweise derart ausgebildet ist, dass das Getränk aus dem Getränkeauslauf direkt in ein portables Gefäß einleitbar ist. In vorteilhafter Weise gelangt somit weder die Getränkesubstanz noch das in der Mischkammer fertig gemischte Getränk in Kontakt mit weiteren Teilen der Getränkezubereitungseinheit, so dass die Rückkontamination ausgeschlossen wird. Dies ist insbesondere dann der Fall, wenn die Mischkammer Teil der Kartusche ist und somit als Austauschprodukt nach jedem Getränkeherstellungsprozess gewechselt wird.

Gemäß einer weiteren bevorzugten Ausführungsform der vorliegenden Erfindung ist vorgesehen, dass die Fluidzuführung mit Fluid gespeist wird, welches durch ein Kühlaggregat gekühlt wird, wobei das Kühlaggregat Teil der Getränkezubereitungseinheit oder eines mit der Getränkezubereitungseinheit in Wirkverbindung stehenden separaten Kühlschranks ist. In vorteilhafter Weise sind somit Kaltgetränke herstellbar, auch wenn die Kartusche nicht gekühlt ist und beispielweise Zimmertemperatur aufweist. Die Integration des Systems in einen bestehenden Kühlschrank hat den Vorteil, dass das bestehende Kühlaggregat des Kühlschranks für die Getränkezubereitungseinheit in effizienter Weise einfach mitgenutzt werden kann. Insbesondere bei sogenannten "Side-by-side"-Kühlschränken (oft auch als amerikanische Kühlschränke bezeichnet) findet sich in der Front ausreichend Bauraum zur Integration des Systems. Denkbar ist, dass es sich bei der Getränkezubereitungseinheit um ein Nachrüstset für einen solchen Kühlschrank handelt. Das Kühlaggregat umfasst vorzugsweise eine Kompressorkühleinheit, eine Absorberkühleinheit oder einen thermoelektrischen Kühler.

Gemäß einer bevorzugten Ausführungsform der vorliegenden Erfindung ist vorgesehen, dass die Fluidzuführung mit Fluid gespeist wird, welches durch einen Karbonisierer mit Kohlensäure versetzt wird. Vorteilhafterweise lassen sich mit dem System somit auch mit Kohlensäure versetzte Erfrischungsgetränke herstellen. Vorzugsweise ist der Karbonisierer Teil der Getränkezubereitungseinheit, wobei der Karbonisierer insbesondere eine Aufnahme für eine CO₂-Patrone und eine Zuführeinrichtung zum Versetzen des Fluids mit CO₂ aus der CO₂-Patrone aufweist.

Die Mischkammer kann als Teil der austauschbaren Kartusche ausgebildet sein. Auf diese Weise wird eine Verunreinigung der Getränkezubereitungseinheit durch die Getränkesubstanz wirksam vermieden, weil lediglich Teile der austauschbaren Einwegkartusche mit der Getränkesubstanz in Kontakt gelangen. Vorzugsweise ist zwischen dem Reservoir und der Mischkammer ein weiteres Dichtelement angeordnet, welches beim Einsetzen der Kartusche in die Kartuschenaufnahme oder beim Aktivieren der Kartuschenentladeeinrichtung geöffnet wird. Das weitere Dichtelement dient dazu, die Kartusche auf der Ausgangsseite beim Transport oder der Lagerung aromadicht zu verschließen. Auf der Eingangsseite ist die Kartusche insbesondere durch das weiter oben beschriebene Dichtelement aromadicht verschlossen, so dass das Reservoir vor dem Einsetzen der Kartusche in die Kartuschenaufnahme und insbesondere vor dem Start des Getränkeherstellungsprozesses vollständig aromadicht verschlossen ist, wodurch beispielsweise eine lange Haltbarkeit der Kartusche zu erzielen ist. Denkbar ist, dass das weitere Dichtelement eine Dichtfolie umfasst, welche durch einen Druckanstieg im Reservoir beim Überführen des Kolbens von der Ausgangsposition in die Endposition geöffnet wird und insbesondere zerreißt. Vorteilhafter Weise wird bei diesem System das weitere Dichtelement beim Herstellen des Getränks automatisch geöffnet.

Die als Teil der Kartusche ausgebildete Mischkammer weist vorzugsweise eine Schnellkupplung zum Verbinden der Mischkammer mit der Fluidzuführung, wenn die Kartusche in die Kartuschenaufnahme eingesetzt wird. Auf diese Weise wird die Mischkammer beim Einsetzen automatisch in Fluidverbindung mit der Fluidzuführung gebracht. Die Schnellkupplung weist insbesondere einen Kupplungsstutzen und eine den Kupplungsstutzen im gekoppelten Zustand aufnehmende Kupplungsaufnahme auf, wobei der Kupplungsstutzen und/oder die Kupplungsaufnahme eine Dichtung umfasst und/oder wobei im gekoppelten Zustand der Kupplungsstutzen in die Kupplungsaufnahme rastend eingreift und/oder wobei der Kupplungsstutzen Teil der Getränkezubereitungseinheit und die Kupplungsaufnahme Teil der Mischkammer ist. Denkbar ist, dass die Schnellkupplung eine Steckkupplung, Monokupplung, Multikupplung, Clean-Break-Kupplung, Verschlusskupplung, Durchgangskupplung und/oder Durchgangskupplung umfasst.

Erfindungsgemäss ist vorgesehen, dass die Kartuschenaufnahme ein Formschlusselement aufweist, welches die Kartusche formschlüssig aufnimmt, wobei die Kartusche vorzugsweise zusätzlich kraftschlüssig in der Kartuschenaufnahme gehalten ist. Denkbar ist beispielsweise, dass das Formschlusselement wenigstens ein Feder- und/oder Rastelement umfasst, welches durch Einsetzen der Kartusche in die Kartuschenaufnahme komprimiert wird und/oder einrastet, wobei die Kartuschenaufnahme vorzugsweise eine Einführschräge und/oder Positionierhilfe aufweist. Vorzugsweise weist die Kartuschenaufnahme eine oberes Formschlusselement, welches die Kartusche im Bereich ihrer Eingangsseite hält, und ein unteres Formschlusselement, welches die Kartusche im Bereich der Ausgangsseite und/oder der Mischkammer hält, auf.

Die Kartuschenaufnahme ist derart ausgebildet ist, dass die Kartusche zwischen dem oberen Formschlusselement und dem unteren Formschlusselement einen Durchmesser aufweisen kann, der größer oder kleiner als der Durchmesser im Bereich des oberen und unteren Formschlusselements ist. Auf diese Weise können Kartuschen verwendet werden, die zumindest in ihrem Zwischenbereich, d.h. in jenen Bereichen, in denen das obere und untere Formschlusselemente nicht angreifen, unterschiedliche geometrische Ausgestaltungen aufweisen. Somit können insbesondere Kartuschen mit Reservoiren unterschiedlicher Volumina Verwendung finden. Beispielsweise lassen sich für spirituosenhaltige Getränke Kartuschen mit kleineren Mengen von Getränkesubstanz bereitstellen, als für alkoholfreie koffeinhaltige und kohlensäurehaltige Erfrischungsgetränke.

Es wäre auch denkbar, dass innerhalb der Kartusche ein Abschirmelement angeordnet ist, auf welches die Kartuschenentladeeinrichtung wirkt, um die Getränkesubstanz vom Reservoir in die Mischkammer zu überführen, wobei das Abschirmelement zwischen der Kartuschenentladeeinrichtung und der Getränkesubstanz angeordnet ist. Vorteilhafterweise wird die Kartuschenentladeeinrichtung von der Getränkesubstanz mittels des Abschirmelements isoliert, so dass keine Rückkontamination der Getränkezubereitungsmaschine über die Kartuschenentladeeinrichtung erfolgen kann. Damit trotzdem ein Entleeren des Reservoirs möglich ist, ist das Abschirmelement flexibel und insbesondere als Faltenbalg oder biegeschlaffes Beutelelement ausgebildet. Das Abschirmelement ist dabei stets innerhalb des Reservoirs angeordnet, wobei innerhalb des Faltenbalgs oder des biegeschlaffen Beutelelements die Getränkesubstanz angeordnet ist. Wenn die Kartuschenentladeeinrichtung, also insbesondere der Stößel oder die Druckluft auf den Faltenbalg oder das Beutelelement wirken, dann faltet sich der Faltenbalg innerhalb des Reservoirs zusammen oder das Beutelelement wird innerhalb des Reservoirs zusammengedrückt, so dass die Getränkesubstanz vom Reservoir in die Mischkammer überführt wird. Mit anderen Worten: Der Faltenbalg oder das biegeschlaffe Beutelelement erstrecken sich im Ausgangszustand von der Ausgangsseite der Kartusche zumindest teilweise parallel zur Kartuschenwandung bis zur Eingangsseite der Kartusche und werden von der Kartuschenentladeeinrichtung in Richtung der Ausgangsseite verfahren, während des Getränkeherstellungsprozesses.

Ein weiterer Gegenstand der vorliegenden Erfindung zur Lösung der eingangs formulierten Aufgabe ist eine Kartusche für das insbesondere erfindungsgemäße System zur Herstellung eines Getränks, wobei die Kartusche in die Kartuschenaufnahme der Getränkezubereitungseinheit einsetzbar ist und wobei die Kartusche das Reservoir aufweist, welches mit der Getränkesubstanz gefüllt ist. Das Reservoir ist vorzugsweise mit einer vorportionierten Menge an Getränkesubstanz, die zur Erzeugung einer Trinkportion, beispielsweise eine Trinkglasfüllung des gewünschten Getränks, notwendig ist, befüllt. Eine solche Trinkglasfüllung umfasst typischerweise 0,1 Liter, 0,2 Liter, 0,3 Liter, 0,33 Liter, 0,35 Liter, 0,366 Liter, 0,5 Liter oder 1 Liter Flüssigkeit. Vorteilhafterweise kann der Anwender in einfacher Weise unterschiedliche Getränke erzeugen, indem er eine bestimmte Kartusche, welche die entsprechende Getränkesubstanz zur Erzeugung des gewünschten Getränks enthält, auswählt, in die Kartuschenaufnahme einsetzt und den Getränkeherstellungsprozess an der Getränkezubereitungseinheit startet. Das Getränk wird sodann automatisch erzeugt, in ein Trinkgefäß geleitet und dem Anwender somit bereitgestellt. Anschließend wird die verbrauchte Kartusche entfernt und entsorgt. Da eine Rückkontamination der Getränkezubereitungseinheit bei dem erfindungsgemäße Sinn vermieden wird, braucht es vorteilhafterweise keinen Spül- oder Reinigungsvorgang bevor ein neues Getränk mit einer anderen Geschmacksrichtung erzeugt wird.

Die Getränkesubstanz umfasst vorzugsweise eine flüssige Getränkesubstanz, wie Erfrischungsgetränke (auch als Softdrinks bezeichnet), Süßgetränke, Fruchtsäfte, Fruchtnektare, Fruchtsaftkonzentrate, Fruchtschorlen, Limonaden, Brausen, Energy Drinks, isotonische Getränke, Bier, Biermischgetränke, Tafelwasser, Brause, Mineralwasser, Spirituosen, Alkopops, Fruchtwein, Gemüsesäfte, Gemüsenektare, Schaumwein, Fruchtschaumwein, alkoholische Mischgetränke, Wein, Weinschorlen, Cocktails, Kaffee, Tee, Eistee, Milch, Kakaogetränke, koffeinhaltige, alkoholische, (frucht-)zuckerhaltige und/oder kohlensäurehaltige Getränke und deren Mischungen und Abwandlungen. Denkbar ist auch, dass die Getränkesubstanz insbesondere nur flüssige Pre-Mix-Bestandteile für die vorstehend genannten Getränke umfasst, so dass durch Vermischung der Pre-Mix-Bestandteile mit Wasser in der Mischkammer die genannten Getränke erst entstehen. Denkbar ist auch, dass die Getränkesubstanz zusätzlich oder ausschließlich partikelförmige Substanzen enthält, wie lösliche Pulver, bspw. Brausepulver oder dergleichen.

Es wäre möglich, dass die Kartusche einen im Reservoir angeordneten Kolben aufweist, welcher zwischen einer Ausgangsposition nahe einer Eingangsseite der Kartusche und einer Endposition, die von der Eingangsseite in Richtung einer Ausgangsseite verschoben ist, überführbar ist. Auf diese Weise wird die Getränkesubstanz aus dem Reservoir in die Mischkammer befördert. Die Mischkammer ist vorzugsweise Teil der Kartusche und insbesondere unterhalb des Reservoirs angeordnet, wenn die Kartusche in die Kartuschenaufnahme eingesetzt ist.

Vorzugsweise hat der Kolben eine Dichteinrichtung, insbesondere in Form einer flexiblen umlaufenden Dichtlippe, aufweist, welche einen Spalt zwischen einer Wandung des Reservoirs und dem Kolben abdichtet.

Vorzugsweise hat der Kolben eine Stößelaufnahme zum Aufnehmen eines Stößels der Getränkezubereitungseinheit, wobei der Kolben dazu ausgebildet ist, durch Einführen des Stößels in das Reservoir von der Ausgangsposition in die Endposition überführt zu werden, so dass die Getränkesubstanz aus dem Reservoir in eine in Fluidrichtung hinter dem Reservoir und insbesondere unterhalb des Reservoirs angeordnete Mischkammer geleitet wird. Die Stößelaufnahme kann beispielsweise eine trichterförmige Aufnahme, eine Einbuchtung, Ausbuchtung oder dergleichen sein, welche den Stößel auf dem Kolben zentriert und gegen seitliches Abrutschen sichert.

Unter diesen Umständen wäre es vorteilhaft, dass die Kartusche im Bereich der Einführseite ein Dichtelement aufweist, welches durch das Einführen des Kolbens geöffnet wird, wobei insbesondere das Dichtelement eine Dichtfolie umfasst, die beim Einführen des Kolbens einreist. Vorzugsweise ist zwischen dem Reservoir und der Mischkammer ein weiteres Dichtelement angeordnet, welches beim Einsetzen der Kartusche in die Kartuschenaufnahme oder beim Aktivieren der Kartuschenentladeeinrichtung geöffnet wird. Auch das weitere Dichtelement umfasst vorzugsweise eine Dichtfolie, welche durch einen Druckanstieg im Reservoir beim Überführen des Kolbens von der Ausgangsposition in die Endposition geöffnet wird und insbesondere zerreißt. Das Dichtelement und das weitere Dichtelement dienen, wie oben bereits ausführlich beschrieben, zum aromadichten Verschließen des Reservoirs beim Transport oder während der Lagerung derselben.

Vorzugsweise weist die Kartusche eine Mischkammer auf, welche mit einer Fluidzuführung der Getränkezubereitungseinheit in Fluidverbindung gebracht werden kann. Vorzugsweise umfasst die Mischkammer hier eine Schnellkupplung zum Verbinden der Mischkammer mit der Fluidzuführung, wenn die Kartusche in die Kartuschenaufnahme eingesetzt wird.

Die Mischkammer weist vorzugsweise einen Getränkeauslass auf, durch welchen das aus einer Vermischung der Getränkesubstanz mit dem Fluid gebildete Getränk abgegeben wird, wobei das System vorzugsweise derart ausgebildet ist, dass das Getränk aus dem Getränkeauslass direkt in ein portables Gefäß einleitbar ist. Vorteilhafterweise gelangt somit weder die Getränkesubstanz noch das aus der Getränkesubstanz in der Mischkammer hergestellte Getränk in direkten Kontakt mit einem Teil der Getränkezubereitungseinheit, so dass Rücckontamination wirksam vermieden werden kann.

Es kann vorgesehen werden, dass die Kartusche wenigstens ein Verbindungselement aufweist, welches beim Einsetzen der Kartusche in die Getränkezubereitungseinheit mit der Kartuschenaufnahme zusammenwirkt, um die Kartusche in der Kartuschenaufnahme zu halten. Denkbar ist, dass das Verbindungselement ein Einführelement umfasst, welches in ein Formschlusselement, insbesondere in Form eines Feder- und/oder Rastelements der Kartuschenaufnahme eingreift.

Erfindungsgemäss ist vorgesehen, dass die Kartusche ein oberes Verbindungselement im Bereich der Eingangsseite und ein unteres Verbindungselement im Bereich der Ausgangsseite und/oder der Mischkammer aufweist. Vorzugsweise weist die Kartusche in einem Zwischenbereich zwischen der Eingangsseite und der Ausgangsseite einen gegenüber dem Durchmesser der Kartusche im Bereich der Eingangsseite und/oder der Ausgangsseite vergrößerten oder verringertem Durchmesser auf. Auf diese Weise können Kartuschen mit Reservoirs unterschiedlicher Volumina in die Kartuschenaufnahme eingesetzt werden. Denkbar ist, dass der Durchmesser der Kartusche im Bereich der Eingangsseite im Wesentlichen identisch mit dem Durchmesser der Kartusche im Bereich der Mischkammer und/oder der Ausgangsseite ist. Alternativ kann der Durchmesser auf der Eingangsseite aber auch unterschiedlich zum Durchmesser auf der Ausgangsseite sein, damit ein Verdrehschutz realisiert wird und ein korrektes Einsetzen der Kartusche in die Kartuschenaufnahme sichergestellt ist.

Die Kartusche ist vorzugsweise entlang ihrer Längsachse drehsymmetrisch ausgebildet, damit das Einsetzen der Kartusche in die Kartuschenaufnahme für den Anwender vereinfacht wird.

Es könnte vorgesehen werden, dass innerhalb der Kartusche ein Abschirmelement angeordnet ist, wobei das Abschirmelement bevorzugt ein Faltenbalg oder ein biegeschlaffes Beutelelement umfasst, welches innerhalb des Reservoirs angeordnet ist, wobei innerhalb des Faltenbalgs oder des biegeschlaffen Beutelelements die Getränkesubstanz angeordnet ist. Der Faltenbalg oder das Beutelelement bestehen insbesondere aus einer flüssigkeitsundurchlässigen und/oder gasundurchlässigen Folie. Ferner sind der Faltenbalg oder das Beutelelement vorzugsweise im Bereich der Ausgangsseite der Kartusche an der Kartusche befestigt.

Ein weiterer Gegenstand der vorliegenden Erfindung ist eine Getränkezubereitungseinheit für das insbesondere erfindungsgemäße System zur Herstellung eines Getränks, wobei die Getränkezubereitungseinheit die Kartuschenaufnahme, in welche die insbesondere erfindungsgemäße Kartusche reversibel einsetzbar ist, eine Kartuschenentladeeinrichtung, welche ein zumindest teilweises Überführen der Getränkesubstanz vom Reservoir in eine Mischkammer bewirkt, und die Fluidzuführung aufweist, die in die Mischkammer mündet.

Die Kartuschenentladeeinrichtung kann einen bewegbaren Stößel umfassen, der auf einer Eingangsseite der Kartusche in die Kartusche einführbar ist, um die Getränkesubstanz auf einer Ausgangsseite der Kartusche aus der Kartusche zu pressen. Vorzugsweise weist die Getränkezubereitungseinheit eine Führungseinheit zur motorgetriebenen Zuführung des Stößels in die Kartusche auf, wobei die Führungseinheit den Stößel ein geradliniges oder gekrümmtes Führungselement zum Einführen des Stößels umfasst und wobei die Führungseinheit einen elektrischen oder hydraulischen Linearmotor und insbesondere einen Spindelantrieb aufweist.

Die Getränkezubereitungseinheit kann eine Mischkammer aufweisen, wobei die Mischkammer von der übrigen Getränkezubereitungseinheit abnehmbar ist. In dieser Ausführungsform ist die Mischkammer nicht Teil der Kartusche, sondern separat von der Kartusche in die Getränkezubereitungseinheit einsetzbar und (für Reinigungs- und Servicezwecke) herausnehmbar. Vorteilhafterweise kann die Mischkammer somit mehrfach verwendet werden. Denkbar ist, dass die Getränkezubereitungseinheit mit einem automatischen Spül- und Reinigungsmechanismus zum Reinigen der Mischkammer nach jedem Getränkeherstellungsprozess oder nach einer bestimmten Anzahl Getränkeherstellungsprozesse.

Denkbar ist, dass die Getränkezubereitungseinheit eine Kühlaggregat zum Kühlen eines Fluides, welches der Fluidzuführung zugeführt wird, aufweist.

Ferner wird hier ein Verfahren zur Herstellung eines Getränks offenbart, insbesondere mit dem erfindungsgemäßen System, aufweisend die folgenden Schritte:
- Einsetzen einer mit einer Getränkesubstanz gefüllten Kartusche in eine Kartuschenaufnahme einer Getränkezubereitungseinheit,
- Überführen der Getränkesubstanz aus einem Reservoir der Kartusche in eine Mischkammer mittels einer Kartuschenentladeeinrichtung,
- Einspeisen eines Fluides in die Mischkammer mittels einer Fluidzuführung,
- Ableiten des in der Mischkammer durch Vermischung der Getränkesubstanz mit dem Fluid erzeugten Getränks mittels eines Getränkeauslaufs.

Das Verfahren hat, wie das oben beschriebene erfindungsgemäße System, gegenüber dem Stand der Technik den Vorteil, dass eine Rückkontamination der Getränkezubereitungseinheit weitgehend vermieden wird, da das zugeführte Fluid zur Vermischung mit der Getränkesubstanz nicht in das Reservoir geleitet wird, sondern in die Mischkammer. Da das Fluid nicht zum Überführen der Getränkesubstanz genutzt wird, wird die Getränkesubstanz vorzugsweise durch einen Kolben aus dem Reservoir in die Mischkammer gedrückt, indem der Kolben mittels der Kartuschenentladeeinrichtung von einer Ausgangsposition in eine Endposition bewegt wird. Denkbar ist, dass der Kolben hierbei mittels einer Kartuschenentladeeinrichtung in Form eines auf den Kolben wirkenden Stößels oder durch Druckluft bewegt wird. Vorzugsweise wird der Stößel mit Hilfe einer Führungseinheit motorgetrieben in die Kartusche eingeführt und wirkt dabei auf den Kolben, um den Kolben von der Ausgangsposition in die Endposition zu bewegen.

Alternativ wäre auch denkbar, dass die Getränkesubstanz durch Druckluft oder Unterdruck aus dem Reservoir in die Mischkammer überführt wird

Gemäß einer bevorzugten Ausführungsform der vorliegenden Erfindung ist vorgesehen, dass das Fluid vor dem Einspeisen in die Mischkammer gekühlt und/oder karbonisiert wird. Es kann vorgesehen werden, dass beim Einführen des Stößels in die Kartusche ein die Kartusche abdichtendes Dichtelement geöffnet wird, wobei das Dichtelement vorzugsweise eine Dichtfolie umfasst, die von dem Stößel zerrissen wird. Denkbar ist, dass durch das Überführen der Getränkesubstanz in Richtung der Mischkammer ein weiteres Dichtelement, welches zwischen dem Reservoir und der Mischkammer, geöffnet wird, wobei das weitere Dichtelement vorzugsweise eine Dichtfolie umfasst, die durch den Druckanstieg im Reservoir zerrissen wird.

Die Kartuschenentladeeinrichtung kann auf ein innerhalb der Kartusche angeordnetes Abschirmelement wirken, um die Getränkesubstanz aus dem Reservoir in die Mischkammer zu überführen, wobei das Abschirmelement währenddessen gefaltet oder zusammengedrückt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figur 1: zeigt eine schematische Schnittbildansicht eines Systems, einer Kartusche, einer Getränkezubereitungseinheit und eines Verfahrens zur Herstellung eines Getränks gemäß einer beispielhaften Ausführungsform der vorliegenden Erfindung.
- Figur 2a: zeigt eine Detailansicht der Kartusche gemäß der ersten beispielhaften Ausführungsform der vorliegenden Erfindung.
- Figur 2b: zeigt eine Detailansicht der Getränkezubereitungseinheit gemäß der ersten beispielhaften Ausführungsform der vorliegenden Erfindung.
- Figur 2c: zeigt eine schematische Ansicht, in welcher die in Figur 2a illustrierte Kartusche in die in Figur 2b illustrierte Getränkezubereitungseinheit eingesetzt ist.
- Figur 3: zeigt das System und das Verfahren zur Herstellung eines Getränks gemäß einer beispielhaften zweiten Ausführungsform der vorliegenden Erfindung.
- Figur 4: zeigt das System und das Verfahren zur Herstellung eines Getränks gemäß der beispielhaften ersten Ausführungsform der vorliegenden Erfindung.
- Figur 5: zeigt ein System und ein Verfahren zur Herstellung eines Getränks gemäß einer beispielhaften dritten Ausführungsform der vorliegenden Erfindung.
- Figuren 6a, 6b: zeigt ein System und ein Verfahren zur Herstellung eines Getränks gemäß einer beispielhaften vierten Ausführungsform der vorliegenden Erfindung.
- Figuren 7a, 7b: zeigt ein System und ein Verfahren zur Herstellung eines Getränks gemäß einer beispielhaften fünften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

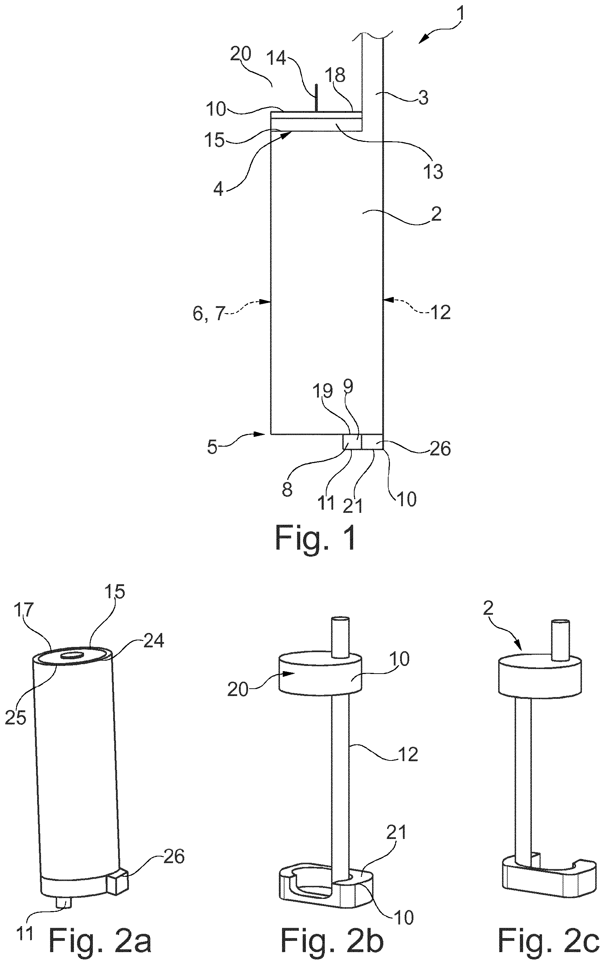

In **Figur 1** ist eine schematische Schnittbildansicht eines erfindungsgemäßen Systems 1 mit erfindungsgemäßen einer Kartusche 2 und einer erfindungsgemäßen Getränkezubereitungseinheit 3 zur Herstellung eines Getränks mit Hilfe eines erfindungsgemäßen Verfahrens gemäß einer beispielhaften ersten Ausführungsform der vorliegenden Erfindung dargestellt.

Das vorliegende System 1 umfasst die Getränkezubereitungseinheit 3, in welche austauschbare Kartuschen 2 einsetzbar sind, die mit einer bestimmten Getränkesubstanz 7 gefüllt sind. Innerhalb der Getränkezubereitungseinheit 3 wird mit Hilfe der Getränkesubstanz 7 und ggf. einer zusätzlichen Wasserquelle ein entsprechendes Getränke erzeugt. Die Kartusche 2 ist dabei vorzugsweise mit einer vorportionierten Menge an Getränkesubstanz 7, die zur Erzeugung einer gezielten Trinkportion, beispielsweise eine Trinkglasfüllung des gewünschten Getränks, notwendig ist, befüllt. Es steht insbesondere eine Mehrzahl unterschiedlicher Kartuschen 2 zur Verfügung, die zur Erzeugung verschiedener Getränke mit unterschiedlichen Getränkesubstanzen 7 befüllt sind. Wenn der Anwender des Systems 1 ein bestimmtes Getränk trinken möchte, braucht er lediglich aus der Mehrzahl der unterschiedlichen Kartuschen 2 diejenige Kartusche 2, welche die entsprechende Getränkesubstanz 7 zur Erzeugung des gewünschten Getränks enthält, auswählen, in eine Kartuschenaufnahme 10 der Getränkezubereitungseinheit 3 einsetzen und den Getränkeherstellungsprozess an der Getränkezubereitungseinheit 3 ggf. starten, beispielsweise durch Drücken eines Startknopfs, entsprechendes Berühren eines berührungssensitiven Displays, durch Gestik- oder Sprachsteuerung oder mittels einer geeigneten Applikation auf einem Mobiltelefon. Denkbar ist auch, dass der Getränkeherstellungsprozess automatisch steuert, wenn das Einlegen einer neuen Kartusche 2 in die Kartuschenaufnahme 10 erkannt wird. In jedem der vorgenannten Fälle wird das gewünschte Getränk sodann automatisch erzeugt, in ein Trinkgefäß geleitet und dem Anwender somit bereitgestellt. Anschließend wird die verbrauchte Kartusche 2 entfernt und entsorgt. Die Getränkezubereitungseinheit 3 ist nun wieder bereit, mit einer beliebigen neuen Kartusche 2 befüllt zu werden, um ein weiteres Getränk zu erzeugen.

Die Getränkesubstanz 7 umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische Mischgetränke.

Die Kartusche 2 umfasst einen zylinderförmigen Behälter mit einer Eingangsseite 4 (in der Zeichnung oben angeordnet) und einer Ausgangsseite 5 (in der Zeichnung unten angeordnet). Innerhalb des Behälters weist die Kartusche 2 ein Reservoir 6 auf, welches mit der flüssigen Getränkesubstanz 7 befüllt ist. Im Bereich der Ausgangsseite 5 weist die Kartusche 2 eine Mischkammer 8 auf (d.h. die Mischkammer ist hier Teil der Kartusche 2), die fest mit dem Behälter verbunden ist. Das Reservoir 6 mündet in diesem Bereich in eine Überführungsöffnung 9, durch welche die Getränkesubstanz von dem Reservoir 6 in die Mischkammer 8 gelangen kann. Der Boden des Reservoirs 6 ist im vorliegenden Beispiel trichterförmig ausgebildet, wobei im Zentrum des trichterförmigen Bodens die Überführungsöffnung 9 angeordnet ist. Die Überführungsöffnung 9 führt sodann in ein optionales kurzes Rohrstück, welches in die Mischkammer 8 vorsteht.

Die Mischkammer 8 weist einen Getränkeauslauf 11 auf, durch welchen das innerhalb der Mischkammer 8 erzeugte Getränk die Mischkammer verlässt und insbesondere direkt in das Trinkgefäß (nicht abgebildet) geleitet wird, d.h. ohne dass Teile der Getränkezubereitungseinheit 3 in Kontakt mit dem Getränk gelangen. Auf diese Weise wird Rückkontamination der Getränkezubereitungseinheit 3 verhindert. Das Trinkgefäß wird insbesondere direkt unterhalb des Getränkeauslaufs 11 angeordnet.

Die Mischkammer 8 weist eine Schnellkupplung 26 auf, mit welcher die Mischkammer 8 an eine Fluidzuführung 12 der Getränkezubereitungseinheit 3 angeschlossen werden kann. Die Schnellkupplung 26 ist derart ausgebildet, dass beim Einsetzen der Kartusche 2 in die Kartenaufnahme 10 eine Fluidverbindung zwischen der Mischkammer 8 und der Fluidzuführung 12 hergestellt wird. Während des Getränkeherstellungsprozesses gelangt über diese Fluidverbindung Fluid, insbesondere gekühltes und karbonisiertes Trinkwasser, von der Fluidzuführung in die Mischkammer 8. Ferner gelangt während des Getränkeherstellungsprozesses Getränkesubstanz 7 von dem Reservoir 6 durch die Überführungsöffnung 9 in die Mischkammer 8. Durch Vermischung der Getränkesubstanz 7 mit dem Fluid in der Mischkammer 8 bildet sich das Getränk, welches die Mischkammer 8 sodann durch den Getränkeauslauf 11 verlässt. Die Fluidzuführung 12 umfasst eine Wasserleitung, welche als Bypass zur Kartusche 2 fungiert. Das Fluid muss somit nicht durch das Reservoir 6 gepumpt werden, sondern trifft erst in der Mischkammer 8 auf die Getränkesubstanz 7.

Zur Überführung der Getränkesubstanz 7 von dem Reservoir 6 in die Mischkammer 8 weist die Kartusche 2 einen Kolben 13 auf, welcher im Reservoir 6 beweglich angeordnet ist. Der Kolben 13 umfasst im vorliegenden Beispiel ein scheibenförmiges Element, dessen Durchmesser im Wesentlichen dem Durchmesser des Reservoirs 6 entspricht. Der verbleibende Spalt zwischen der Reservoirwandung und dem Kolben 13 wird vorzugsweise durch eine Dichteinrichtung 15 in Form einer flexiblen umlaufenden Dichtlippe oder einem umlaufenden flexiblen Dichtungswulst abgedichtet.

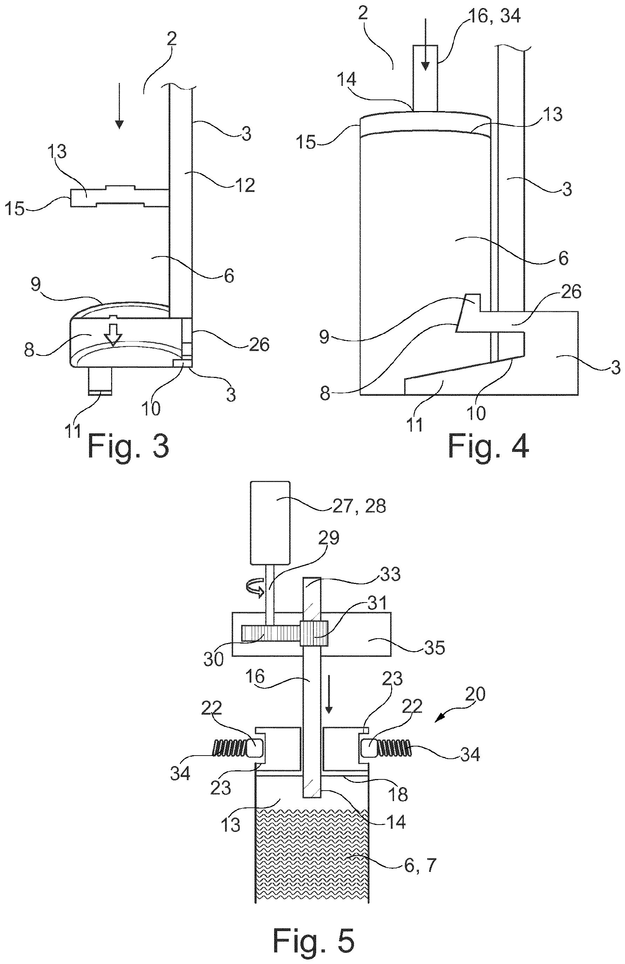

Die Getränkezubereitungseinheit 3 weist zur Betätigung des Kolbens 13 eine Kartuschenentladeeinrichtung 34 auf. Die Kartuschenentladeeinrichtung 34 weist einen Stößel 16 (siehe Figur 5) auf, der dazu ausgebildet ist, den Kolben 13 von einer Ausgangsposition in eine Endposition zu überführen, um die Getränkesubstanz 7 in die Mischkammer 7 zu drücken. Im Auslieferungszustand der Kartusche 2 ist der Kolben 13 in der Ausgangsposition nahe der Eingangsseite 4 angeordnet. Der Kolben 13 weist auf seiner der Getränkesubstanz 7 abgewandten Seite eine Stößelaufnahme 14 zum Aufnehmen des Stößels 16 (in Figur 1 nicht abgebildet) auf. Nachdem der Getränkeherstellungsprozess gestartet wurde, wird der Stößel 16 in Richtung der Eingangsseite 4 in die Kartusche 2 gefahren und gelangt in die Stößelaufnahme 14. Der Stößel 16 wird sodann weiter in die Kartusche 2 eingefahren, wodurch der Kolben 2 von der Eingangsseite 4 in Richtung der Ausgangsseite 5 verfahren wird, bis er eine Endposition nahe der Ausgangsseite 5 einnimmt. Durch das Bewegen des Kolbens 13 durch das Reservoir 6 wird die Getränkesubstanz 7 aus dem Reservoir 6 in die Mischkammer 8 gedrückt, um sich in der Mischkammer 8 zur Herstellung des Getränks mit dem Fluid zu vermischen. Nachdem der Getränkeherstellungsprozess abgeschlossen ist, wird der Stößel 16 wieder aus der Kartusche 2 herausgefahren, damit die leere bzw. verbrauchte Kartusche 2 aus der Getränkezubereitungseinheit 3 wieder entnommen werden kann. Damit der Stößel 16 auf der Eingangsseite 4 in die Kartusche 2 eingefahren werden kann, weist der Behälter auf der Eingangsseite 4 eine Stößelöffnung 17 auf. Denkbar ist, dass sich die Stößelöffnung 17 auf den Querschnitt des Stößels 16 beschränkt oder dem gesamten Querschnitt des Kolbens 13 bzw. des Reservoirs 6 entspricht.

Damit die Getränkesubstanz 7 während der Lagerung und des Transports der Kartusche 2 nicht aus der Kartusche 2 austritt bzw. das Aroma erhalten bleibt, wird die Kartusche 2 im Ausgangszustand luft-, flüssigkeits- und aromadicht verschlossen. Zu diesem Zweck weist die Kartusche 2 ein Dichtelement 18 in Form einer dünnen Dichtfolie an ihrer Eingangsseite 4 auf, sowie ein weiteres Dichtelement 19 in Form einer dünnen Dichtfolie im Bereich der Ausgangsseite 5, insbesondere innerhalb der Überführungsöffnung 9. Die beiden Dichtfolien sind derart ausgebildet, dass sie unter Druck leicht einreißen. Beim Einsetzen der Kartusche 2 in die Kartuschenaufnahme 10 sind beide Dichtfolien noch intakt. Sobald der Stößel 16 in die Kartusche 2 fährt und in dabei in Kontakt mit der Dichtfolie auf der Eingangsseite 4 gerät, reißt die Dichtfolie ein, so dass der Stößel 16 auf den Kolben 13 gelangt. Beim anschließenden Herunterdrücken des Kolbens 13 erhöht sich der Druck im Inneren des Reservoirs 6 bis die Dichtfolie in der Überführungsöffnung 9 einreißt, so dass die Getränkesubstanz 7 in die Mischkammer 8 gelangt.

Optional wäre auch denkbar, dass innerhalb der Mischkammer 8 ein in Richtung der Dichtfolie innerhalb der Überführungsöffnung 9 hervorstehendes Aufstechelement angeordnet ist, welches in Kontakt mit der Dichtfolie gelangt, wenn sich die Dichtfolie unter dem im Reservoir 6 aufbauenden Druck in Richtung der Mischkammer 8 ausdehnt, so dass ein Einreißen der Dichtfolie durch den Kontakt der gedehnten Dichtfolie mit dem Aufstechelement erfolgt oder zumindest begünstigt wird.

Die Kartuschenaufnahme 10 weist im Bereich der Eingangsseite 4 ein oberes Formschlusselement 20 und im Bereich der Ausgangsseite 5 ein unteres Formschlusselement 21 auf. Das obere und das untere Formschlusselement 20, 21 sind derart ausgebildet, dass die Kartusche 2 durch eine vertikale Bewegung zwischen die beiden Formschlusselement 20, 21 in der Kartuschenaufnahme 10 angeordnet werden kann und in dieser Position durch die beiden Formschlusselemente 20, 21 bzw. zwischen den beiden Formschlusselementen 20, 21 formschlüssig gehalten wird. Das untere Formschlusselement 21 weist dazu eine schalenförmige Aufnahme auf, die an die äußere Formgebung der Kartuschenunterseite angepasst ist. Das obere Formschlusselement 20 weist zwei seitliche Rastelemente 22 auf, die in Richtung der Kartusche 2 federbelastet sind und beim Einsetzen der Kartusche 2 in zwei korrespondierende seitliche Aufnahmen 24 der Kartusche 2, die als Gegenrastelemente 23 fungieren, form- und kraftschlüssig eingreifen. Die Kartusche 2 wird somit während des Getränkeherstellungsprozesses innerhalb der Kartuschenaufnahme 10 fixiert.

In **Figur 2a** ist eine Detailansicht der Kartusche 2 gemäß der ersten beispielhaften Ausführungsform der vorliegenden Erfindung illustriert. In dieser Perspektive ist auf der Oberseite der Kartusche 2 der Kolben 13 zu erkennen, welcher den gesamten Querschnitt des Reservoirs 6 einnimmt. An seinem Rand ist der Kolben 6 mit der umlaufenden Dichteinrichtung 15 in Form einer flexiblen umlaufenden Dichtlippe oder einem umlaufenden flexiblen Dichtungswulst gegen die Reservoirwandung abgedichtet. Der Kolben 3 weist zentral die Stößelaufnahme 14 auf.

Das Dichtungselement, welches sich über den Kolben erstreckt und das Reservoir nach oben bzw. zur Eingangsseite 4 aromadicht abdichtet, ist als dünne, transparente Dichtfolie ausgebildet, welche vom Stößel leicht durchstechbar ist, und daher in Figur 2a nicht in aller Deutlichkeit zu erkennen.

Am oberen Rand der Reservoirwandung ist ein seitlich abstehender Flansch 25 erkennbar, in welchen die zwei seitlichen Aufnahmen 24 in Form von Aussparungen ausgebildet sind. In diese Aussparungen rastet beim Einsetzen der Kartusche 2 in die Kartuschenaufnahme 10 die Gegenrastelemente 23 ein.

Am unteren Ende des Reservoirs 6 weist die Kartusche 2 die Mischkammer 8 auf. In Figur 2a ist der Getränkeauslauf 11 zu erkennen, sowie die Schnellkupplung 26. Es ist zu sehen, dass im vorliegenden Beispiel die Schnellkupplung 26 aus einer Rohraufnahme besteht, in welcher oder über welche das zugehörige Rohrende der Fluidzuführung 12 angeordnet wird, um die Mischkammer 8 mit der Fluizuführung zu koppeln.

In **Figur 2b** ist eine Detailansicht von Einzelheiten der Getränkezubereitungseinheit 3 gemäß der ersten beispielhaften Ausführungsform der vorliegenden Erfindung illustriert. In dieser Perspektive sieht man einerseits die Fluidzuführung 12, welche in Form eines die Kartusche 2 bypassenden Rohres zum Zuführen des Fluides ausgebildet ist, sowie die Kartuschenaufnahme 10 in Form der oberen und unteren Formschlusselemente 20, 21. Das untere Formschlusselement 21 ist dabei ein die Außenkontur der Unterseite der Mischkammer 8 angepasst und weist sowohl eine Aussparung für den Getränkeauslauf 11 sowie für die Schnellkupplung 26 auf.

In **Figur 2c** ist eine schematische Ansicht gezeigt, in welcher die in Figur 2a illustrierte Kartusche 2 in die in Figur 2b illustrierte Getränkezubereitungseinheit 3 eingesetzt ist.

Die Getränkezubereitungseinheit 3 ist entweder eine separate Einzelmaschine, ein sogenanntes Stand-Alone-Gerät, oder Teil eines Kühlschranks (nicht abgebildet). Denkbar ist beispielsweise, dass die Getränkezubereitungseinheit 3 in die Front eines solchen Kühlschranks eingebaut ist. Die Fluidzuführung 12 wird vorzugsweise mit Fluid gespeist, welches zuvor durch ein Kühlaggregat (nicht abgebildet) gekühlt wird. Das Kühlaggregat ist dann wiederum entweder Teil der Getränkezubereitungseinheit 3 (Im Falle des Stand-Alone-Geräts) oder Teil des mit der Getränkezubereitungseinheit 3 in Wirkverbindung stehenden Kühlschranks. Im Falle des Stand-Alone-Geräts kann das Kühlaggregat eine Kompressorkühleinheit, eine Absorberkühleinheit oder einen thermoelektrischen Kühler sein.

Optional wird die Fluidzuführung 12 ferner mit Fluid gespeist wird, welches zuvor durch einen Karbonisierer (nicht dargestellt) mit Kohlensäure versetzt wurde. Auf diese Weise lassen sich mit Kohlensäure versetzte Erfrischungsgetränke herstellen. Der Karbonisierer ist vorzugsweise Teil der Getränkezubereitungseinheit 3, wobei der Karbonisierer insbesondere eine Aufnahme für eine auswechselbare CO₂-Patrone und ggf. eine Zuführeinrichtung zum Versetzen des Fluids mit CO₂ aus der CO₂-Patrone aufweist.

In **Figur 3** ist das System 1 und das Verfahren zur Herstellung eines Getränks gemäß einer beispielhaften zweiten Ausführungsform dargestellt. Es ist die Situation in einer Momentaufnahme gezeigt, in welche der Kolben 13 mittels der Kartuschenentladeeinrichtung 34 von seiner Ausgangsposition nahe der Eingangsseite 4 in seiner Endposition nahe der Ausgangsseite 5 überführt wird, um die Getränkesubstanz 7 aus dem Reservoir 6 in die Mischkammer 8 zu überführen. In diesem Beispiel wird zum Bewegen des Kolbens 13 oberhalb des Kolbens 13 Überdruck in der Kartusche 2 bzw. im Reservoir 6 erzeugt, wodurch sich der Kolben 13 in Richtung der Mischkammer bewegt. Der ansteigende Druck unterhalbe des Kolbens 13 führt dazu, dass (wie oben beschrieben) das weitere Dichtelement 19 zerreißt und somit die Überführungsöffnung 9 freigegeben wird. Wenn der Kolben 13 die untere Endposition eingenommen hat, wird die Druckluftzufuhr wieder unterbrochen, so dass die Kartusche 2 nach Beendigung des Getränkeherstellungsprozesses wieder entnommen werden kann.

Zur Bereitstellung des Überdrucks ist die mittels der Kartuschenentladeeinrichtung 34 hierbei mit einer austauschbaren Druckluftpatrone oder mit einem Kompressor ausgestattet. Im Falle, dass die Getränkezubereitungseinheit 3 ohnehin einen Karbonisierer (siehe oben) aufweist, der eine CO₂-Patrone umfasst, wird vorzugsweise diese CO₂-Patrone gleichzeitig auch als Druckluftquelle für die Kartuschenentladeeinrichtung benutzt.

In **Figur 4** ist das System 1 und das Verfahren zur Herstellung eines Getränks gemäß der in Figur 1 eingangs skizzierten ersten Ausführungsform dargestellt.

Bei dieser ersten Ausführungsform wird der Kolben 13 nicht wie bei der zweiten Ausführungsform mit Überdruck sondern mit dem Stößel 16 von der Ausgangsposition in die Endposition überführt. Der Stößel 16 der mittels der Kartuschenentladeeinrichtung 34 wird von oben in die Kartusche 2 eingeführt, durchstößt dabei das Dichtelement 18 und gelangt in die Stößelaufnahme 14. Anschließend wird durch weiteres Einfahren des Stößels 16 der Kolben in Richtung der Mischkammer 8 bewegt. Hierdurch reist das weitere Dichtelement 19 und die Getränkesubstanz 7 gelangt in die Mischkammer 8. Nachdem der Getränkeherstellungsprozess abgeschlossen ist, wird der Stößel 16 wieder aus der Kartusche 2 herausgefahren, damit der Anwender die Kartusche 2 aus der Getränkezubereitungseinheit 3 entnehmen kann. Der Stößel 16 ist entweder starr und wird vertikal oder schräg geradlinig von oben eingeführt. Alternativ ist der Stößel 16 halbstarr oder flexible ausgebildet und wird über eine Kurvenlinie von oben in die Kartusche 2 eingeführt, so dass die Bauhöhe der Getränkezubereitungseinheit 3 reduziert werden kann. Denkbar ist, dass der Stößel 16 automatisch, beispielsweise mittels eines Motors, oder durch den Anwender manuell zu betätigenden Griffs oder Hebels der Kartuschenentladeeinrichtung 34 eingeführt wird.

In **Figur 5** sind ein System 1 und ein Verfahren zur Herstellung eines Getränks gemäß einer beispielhaften dritten Ausführungsform der vorliegenden Erfindung dargestellt. Die dritte Ausführungsform der vorliegenden Erfindung gleicht im Wesentlichen der anhand von Figuren 1, 2a, 2b, 2c und 4 beschriebenen ersten Ausführungsform.

Bei der Getränkezubereitungseinheit 3 gemäß der dritten Ausführungsform weist die Kartuschenentladeeinrichtung 34 einen elektrische Antrieb 27 auf. Der elektrische Antrieb 27 umfasst insbesondere einen Elektromotor 28( beispielsweise eine Drehstrom-Asynchronmaschine oder eine Drehstrom-Synchronmaschine), der eine Antriebsachse 29 antreibt. Auf der Antriebsachse 29 sitzt ein Primärritzel 30. Das Primärritzel 31 kämmt mit einem Sekundärritzel 32. Das Sekundärritzel 32 weist ein Innenzahnkranz auf, welcher im Eingriff mit einer Gewindespindel 33 steht. Das Sekundärritzel 32 wird in einer Führungseinheit 25 gehalten, welche die Gewindespindel 33 drehbar und längsverschiebbar (in vertikaler Richtung) führt. Die Gewindespindel 33 stellt gleichzeitig den Stößel 16 dar. Durch Drehen der Antriebsachse 29 mittels des Elektromotors 28 wird das Sekundärritzel 31 gedreht und je nach Drehrichtung die Gewindespindel 33 nach unten, also in die Kartusche 2 hinein, oder nach oben, also aus der Kartusche 2 heraus, bewegt. Auf diese Weise kann der Kolben 13 von der Ausgangsposition in die Endposition verfahren werden.

Alternativ umfasst der Antrieb einen elektrischen Linearmotor mit einem Ritzel, das auf einer Antriebswelle eines Elektromotors sitzt, und in eine Zahnstange eingreift, wobei die Zahnstange mit dem Stößel 16 gekoppelt ist oder bereits Teil des Stößels 16 ist. Durch Drehen des Ritzels wird die Zahnstange bewegt und somit der Stößel in die Kartusche gefahren oder aus der Kartusche heraus bewegt.

In der Figur 5 sind ebenfalls die seitlich an der Kartusche 2 angreifenden oberen Formschlusselemente 20 gut zu erkennen. Die oberen Formschlusselemente umfassen jeweils ein Rastelement 22, welche jeweils mittels einer Druckfeder 34 form- und kraftschlüssig in die entsprechende Ausnehmung 24 an der Kartusche 2 eingreifen, um die Kartusche 2 zumindest während des Getränkeherstellungsprozesses reversibel in der Kartuschenaufnahme 10 zu fixieren.

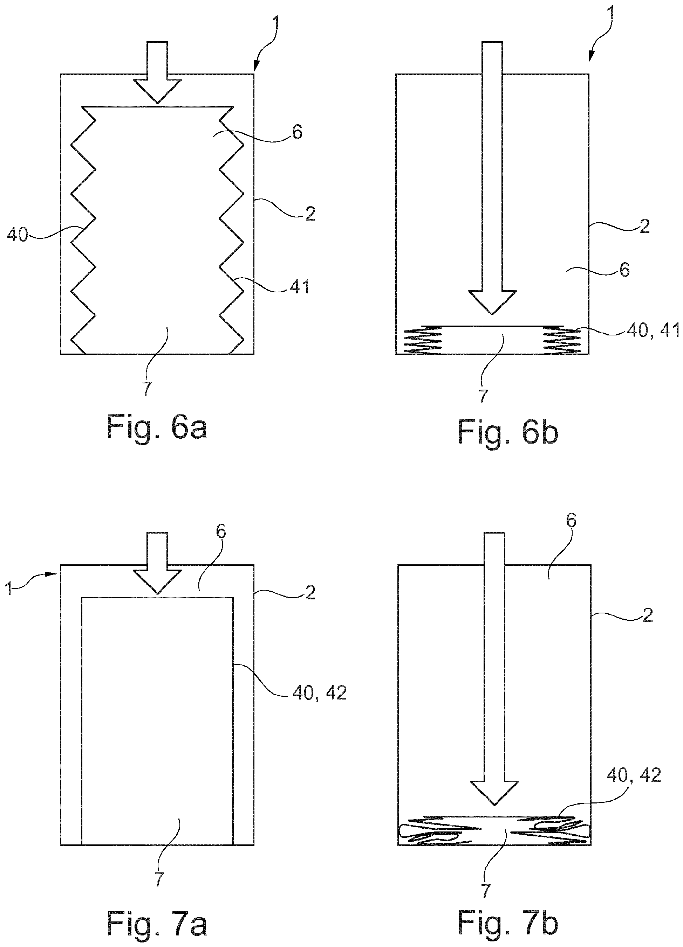

In **Figuren 6a und 6b** ist ein System 1 und ein Verfahren zur Herstellung eines Getränks gemäß einer beispielhaften vierten Ausführungsform der vorliegenden Erfindung dargestellt. Die vierte Ausführungsform gleicht im Wesentlichen der in Figuren 3 und 4 illustrierten zweiten und dritten Ausführungsform, wobei innerhalb der Kartusche 2 ein Abschirmelement 40 in Form eines Faltenbalgs 41 angeordnet ist. Der Faltenbalg 41 ist an der Ausgangsseite 4 der Kartusche 2 befestigt. Innerhalb des Faltenbalgs 41 ist die Getränkesubstanz 7 angeordnet, so dass das Abschirmelement 40 stets zwischen der Kartuschenentladeeinrichtung 34 und der Getränkesubstanz 7 ist und die Kartuschenentladeeinrichtung 34 von der Getränkesubstanz 7 mittels des Abschirmelements 40 isoliert ist. Auf diese Weise wird eine Rücckontamination der Getränkezubereitungsmaschine 3 über die Kartuschenentladeeinrichtung 34 verhindert. Damit trotzdem ein Entleeren des Reservoirs 6 möglich ist, ist das Abschirmelement 40 flexibel und als Faltenbalg 41 ausgebildet. Beim Entleeren des Reservoirs 6 während des Getränkeherstellungsprozesses wird das Abschirmelement 40 mittels der Kartuschenentladeeinrichtung 34 entweder von einem Stößel 16 oder mittels Druckluft in Richtung der Ausgangsseite 5 bewegt, so dass die Getränkesubstanz 7 von dem Reservoir 7 in Richtung der Mischkammer 8 überführt wird. Der Faltenbalg 41 faltet sich dabei zusammen. Der Faltenbalg 41 ist insbesondere aus einem flüssigkeitsundurchlässigen Folienmaterial gefertigt.

In **Figuren 7a und 7b** ist ein System 1 und ein Verfahren zur Herstellung eines Getränks gemäß einer beispielhaften fünften Ausführungsform der vorliegenden Erfindung dargestellt. Die fünfte Ausführungsform gleicht im Wesentlichen der in Figuren 6a und 6b illustrierten vierten Ausführungsform, wobei innerhalb der Kartusche 2 ein Abschirmelement 40 nicht in Form eines Faltenbalgs 41 sondern in Form eines biegeschlaffen Beutelelements 42 angeordnet ist. Im Unterschied zum Faltenbalg 41 faltet sich das Beutelelement 42 nicht ordentlich zusammen, sondern wird von der Kartuschenentladeeinrichtung 34 einfach zusammengedrückt. Das Beutelelement 42 ist insbesondere aus einem flüssigkeitsundurchlässigen Folienmaterial gefertigt. Wie beim Faltenbalg 41 ist das Beutelelement 42 an der Ausgangsseite 4 der Kartusche 2 befestigt, während innerhalb des Beutelelements 42 die Getränkesubstanz 7 angeordnet ist.

### Bezugszeichenliste

- 1: System
- 2: Kartusche
- 3: Getränkezubereitungseinheit
- 4: Eingangsseite
- 5: Ausgangsseite
- 6: Reservoir
- 7: Getränkesubstanz
- 8: Mischkammer
- 9: Überführungsöffnung
- 10: Kartuschenaufnahme
- 11: Getränkeauslauf
- 12: Fluidzuführung
- 13: Kolben
- 14: Stößelaufnahme
- 15: Dichteinrichtung
- 16: Stößel
- 17: Stößelöffnung
- 18: Dichtelement
- 19: Weiteres Dichtelement
- 20: Oberes Formschlusselement
- 21: Unteres Formschlusselement
- 22: Rastelement
- 23: Gegenrastelement
- 24: Aufnahme
- 25: Flansch
- 26: Schnellkupplung
- 27: Elektrischer Antrieb
- 28: Elektromotor
- 29: Antriebsachse
- 30: Primärritzel
- 31: Sekundärritzel
- 32: Gewindespindel
- 33: Druckfeder
- 34: Kartuschenentladeeinrichtung
- 35: Führungseinheit
- 40: Abschirmelement
- 41: Faltenbalg
- 42: Beutelelement

## Patentansprüche

1. System (1) zur Herstellung eines Getränks, insbesondere eines Kaltgetränks, aufweisend eine Kartusche (2), die ein mit einer Getränkesubstanz (7) gefülltes Reservoir (6) aufweist, und eine Getränkezubereitungseinheit (3) mit einer Kartuschenaufnahme (10), in welche die Kartusche (2) reversibel einsetzbar ist, und einer Kartuschenentladeeinrichtung (34), welche ein zumindest teilweises Überführen der Getränkesubstanz (7) vom Reservoir (6) in eine Mischkammer (8) bewirkt, wobei die Getränkezubereitungseinheit (3) ferner eine Fluidzuführung (12) aufweist, die in die Mischkammer (8) mündet, **dadurch gekennzeichnet, dass** die Kartuschenaufnahme (10) eine oberes Formschlusselement (20, 21), welches die Kartusche (2) im Bereich ihrer Eingangsseite (4) hält, und ein unteres Formschlusselement (20, 21), welches die Kartusche (2) im Bereich der Ausgangsseite (5) und/oder der Mischkammer (8) hält, aufweist, wobei die Kartuschenaufnahme (10) derart ausgebildet ist, dass die Kartusche (2) zwischen dem oberen Formschlusselement (20, 21) und dem unteren Formschlusselement (20, 21) einen Durchmesser aufweist, der größer oder kleiner als der Durchmesser im Bereich des oberen und unteren Formschlusselements (20, 21) ist.

2. System (1) nach Anspruch 1, wobei die Kartuschenentladeeinrichtung (34) eine Druckluftquelle zum Einblasen von Druckluft in das Reservoir (6) auf einer Eingangsseite (4) der Kartusche (2) umfasst, wobei das System (1) insbesondere derart ausgebildet ist, dass durch die Druckluft die Getränkesubstanz (7) direkt aus dem Reservoir (6) gedrückt wird oder dass durch die Druckluft ein Kolben (13) von einer Ausgangsposition in eine Endposition überführt wird.

3. System (1) nach einem der vorhergehenden Ansprüche, wobei die Mischkammer (8) einen Getränkeauslauf (11) aufweist, durch welchen das aus einer Vermischung der Getränkesubstanz (7) mit dem Fluid gebildete Getränk abgegeben wird, wobei das System (1) vorzugsweise derart ausgebildet ist, dass das Getränk aus dem Getränkeauslauf (11) direkt in ein portables Gefäß einleitbar ist.

4. System (1) nach einem der vorhergehenden Ansprüche, wobei die Fluidzuführung (12) mit Fluid gespeist wird, welches durch ein Kühlaggregat gekühlt wird, wobei das Kühlaggregat Teil der Getränkezubereitungseinheit (3) oder eines mit der Getränkezubereitungseinheit (3) in Wirkverbindung stehenden separaten Kühlschranks ist.

5. System (1) nach einem der vorhergehenden Ansprüche, wobei die Fluidzuführung (12) mit Fluid gespeist wird, welches durch einen Karbonisierer mit Kohlensäure versetzt wird.

6. System (1) nach einem der vorhergehenden Ansprüche, wobei die Mischkammer (8) eine Schnellkupplung (26) zum Verbinden der Mischkammer (8) mit der Fluidzuführung (12), wenn die Kartusche (2) in die Kartuschenaufnahme (10) eingesetzt wird, aufweist.

7. System (1) nach Anspruch 6, wobei die Schnellkupplung (26) einen Kupplungsstutzen und eine den Kupplungsstutzen im gekoppelten Zustand aufnehmende Kupplungsaufnahme aufweist, wobei der Kupplungsstutzen und/oder die Kupplungsaufnahme eine Dichtung umfasst und/oder wobei im gekoppelten Zustand der Kupplungsstutzen in die Kupplungsaufnahme rastend eingreift und/oder wobei der Kupplungsstutzen Teil der Getränkezubereitungseinheit (3) und die Kupplungsaufnahme Teil der Mischkammer (8) ist.

8. Kartusche (2) für ein System (1) zur Herstellung eines Getränks nach einem der vorhergehenden Ansprüche, wobei die Kartusche (2) in eine Kartuschenaufnahme (10) einer Getränkezubereitungseinheit (3) des Systems nach einem der vorhergehenden Ansprüche einsetzbar ist und wobei die Kartusche (2) ein Reservoir (6) aufweist, welches mit einer Getränkesubstanz (7) gefüllt ist, wobei die Kartusche (2) wenigstens ein Verbindungselement aufweist, welches beim Einsetzen der Kartusche (2) in die Getränkezubereitungseinheit (3) mit der Kartuschenaufnahme (10) zusammenwirkt, um die Kartusche (2) in der Kartuschenaufnahme (10) zu halten, wobei die Kartusche (2) ein oberes Formschlusselement im Bereich der Eingangsseite (4) und ein unteres Formschlusselement im Bereich der Ausgangsseite (5) und/oder der Mischkammer (8) aufweist, wobei die Kartusche (2) in einem Zwischenbereich zwischen der Eingangsseite (4) und der Ausgangsseite (5) einen gegenüber dem Durchmesser der Kartusche (2) im Bereich der Eingangsseite (4) und/oder der Ausgangsseite (5) vergrößerten oder verringertem Durchmesser aufweist.

9. Kartusche (2) nach Anspruch 8, wobei die Kartusche (2) eine Mischkammer (8) aufweist, welche mit einer Fluidzuführung (12) der Getränkezubereitungseinheit (3) in Fluidverbindung gebracht werden kann.

10. Kartusche (2) nach Anspruch 9, wobei die Mischkammer (8) einen Getränkeauslass aufweist, durch welchen das aus einer Vermischung der Getränkesubstanz (7) mit dem Fluid gebildete Getränk abgegeben wird, wobei das System (1) vorzugsweise derart ausgebildet ist, dass das Getränk aus dem Getränkeauslass direkt in ein portables Gefäß einleitbar ist.

11. Kartusche (2) nach einem der Ansprüche 8 bis 10, wobei die Mischkammer (8) eine Schnellkupplung (26) zum Verbinden der Mischkammer (8) mit der Fluidzuführung (12) aufweist.

12. Kartusche (2) nach der Ansprüche 8 bis 11, wobei das Verbindungselement ein Einführelement umfasst, welches in ein Formschlusselement (20, 21), insbesondere in Form eines Feder- und/oder Rastelements (22) eingreift.

13. Kartusche (2) nach einem der Ansprüche 8 bis 12, wobei der Durchmesser der Kartusche (2) im Bereich der Eingangsseite (4) im Wesentlichen identisch mit dem Durchmesser der Kartusche (2) im Bereich der Mischkammer (8) und/oder der Ausgangsseite (5) ist.

14. Getränkezubereitungseinheit (3) für ein System (1) zur Herstellung eines Getränks nach einem der Ansprüche 1 bis 7, wobei die Getränkezubereitungseinheit (3) die Kartuschenaufnahme (10), in welche die Kartusche (2) nach einem der Ansprüche 8 bis 13 reversibel einsetzbar ist, eine Kartuschenentladeeinrichtung (34), welche ein zumindest teilweises Überführen der Getränkesubstanz (7) vom Reservoir (6) in eine Mischkammer (8) bewirkt, und die Fluidzuführung (12) aufweist, die in die Mischkammer (8) mündet.

15. Getränkezubereitungseinheit (3) nach Anspruch 14, wobei die Getränkezubereitungseinheit (3) ein Kühlaggregat zum Kühlen eines Fluides, welches der Fluidzuführung (12) zugeführt wird, aufweist.

## Claims

1. System (1) for the production of a beverage, in particular a cold beverage, having a cartridge (2) which has a reservoir (6) filled with a beverage substance (7), and a beverage preparation unit (3) having a cartridge receptacle (10) in which the cartridge (2) can be reversibly inserted, and a cartridge discharge device (34) which causes an at least partial transfer of the beverage substance (7) from the reservoir (6) into a mixing chamber (8), wherein the beverage preparation unit (3) also has a fluid supply (12) which opens into the mixing chamber (8), **characterized in that** the cartridge receptacle (10) has an upper form-fitting element (20, 21) which holds the cartridge (2) in the region of its input side (4), and a lower form-fitting element (20, 21) which holds the cartridge (2) in the region of the output side (5) and/or the mixing chamber (8), wherein the cartridge receptacle (10) is configured in such a way that the cartridge (2) has, between the upper form-fitting element (20, 21) and the lower form-fitting element (20, 21), a diameter which is greater or smaller than the diameter in the region of the upper and lower form-fitting element (20, 21).

2. System (1) according to Claim 1, wherein the cartridge discharge device (34) comprises a compressed-air source for blowing compressed air into the reservoir (6) on an input side (4) of the cartridge (2), wherein the system (1) is in particular configured in such a way that the beverage substance (7) is pressed directly out of the reservoir (6) by the compressed air or that a plunger (13) is transferred from a starting position to a final position by the compressed air.

3. System (1) according to either of the preceding claims, wherein the mixing chamber (8) has a beverage outlet (11) through which the beverage formed by mixing the beverage substance (7) with the fluid is dispensed, wherein the system (1) is preferably configured in such a way that the beverage can be introduced from the beverage outlet (11) directly into a portable vessel.

4. System (1) according to one of the preceding claims, wherein the fluid supply (12) is fed with fluid which is cooled by a cooling unit, wherein the cooling unit is part of the beverage preparation unit (3) or of a separate refrigerator which is operatively connected to the beverage preparation unit (3).

5. System (1) according to one of the preceding claims, wherein the fluid supply (12) is fed with fluid which is admixed with carbon dioxide by a carbonator.

6. System (1) according to one of the preceding claims, wherein the mixing chamber (8) has a quick-action coupling (26) for connecting the mixing chamber (8) to the fluid supply (12), when the cartridge (2) is inserted into the cartridge receptacle (10).

7. System (1) according to Claim 6, wherein the quick-action coupling (26) has a coupling piece and a coupling receptacle which receives the coupling piece in the coupled state, wherein the coupling piece and/or the coupling receptacle comprises a seal, and/or wherein, in the coupled state, the coupling piece engages in the coupling receptacle in a latching manner, and/or wherein the coupling piece is part of the beverage preparation unit (3) and the coupling receptacle is part of the mixing chamber (8).

8. Cartridge (2) for a system (1) for the production of a beverage according to one of the preceding claims, wherein the cartridge (2) can be inserted into a cartridge receptacle (10) of a beverage preparation unit (3) of the system according to one of the preceding claims, and wherein the cartridge (2) has a reservoir (6) which is filled with a beverage substance (7), wherein the cartridge (2) has at least one connecting element which interacts with the cartridge receptacle (10) when the cartridge (2) is inserted into the beverage preparation unit (3), in order to hold the cartridge (2) in the cartridge receptacle (10), wherein the cartridge (2) has an upper form-fitting element in the region of the input side (4) and a lower form-fitting element in the region of the output side (5) and/or the mixing chamber (8), wherein the cartridge (2) has, in an intermediate region between the input side (4) and the output side (5), an increased or reduced diameter in relation to the diameter of the cartridge (2) in the region of the input side (4) and/or the output side (5).

9. Cartridge (2) according to Claim 8, wherein the cartridge (2) has a mixing chamber (8) which can be brought into fluidic connection with a fluid supply (12) of the beverage preparation unit (3).

10. Cartridge (2) according to Claim 9, wherein the mixing chamber (8) has a beverage outlet through which the beverage formed by mixing the beverage substance (7) with the fluid is dispensed, wherein the system (1) is preferably configured in such a way that the beverage can be introduced from the beverage outlet directly into a portable vessel.

11. Cartridge (2) according to one of Claims 8 to 10, wherein the mixing chamber (8) has a quick-action coupling (26) for connecting the mixing chamber (8) to the fluid supply (12).

12. Cartridge (2) according to Claims 8 to 11, wherein the connecting element comprises an insert element which engages in a form-fitting element (20, 21), in particular in the form of a spring and/or latching element (22).

13. Cartridge (2) according to one of Claims 8 to 12, wherein the diameter of the cartridge (2) in the region of the input side (4) is substantially identical to the diameter of the cartridge (2) in the region of the mixing chamber (8) and/or the output side (5).

14. Beverage preparation unit (3) for a system (1) for the production of a beverage according to one of Claims 1 to 7, wherein the beverage preparation unit (3) has the cartridge receptacle (10) in which the cartridge (2) according to one of Claims 8 to 13 can be reversibly inserted, a cartridge discharge device (34) which causes an at least partial transfer of the beverage substance (7) from the reservoir (6) into a mixing chamber (8), and the fluid supply (12) which opens into the mixing chamber (8) .

15. Beverage preparation unit (3) according to Claim 14, wherein the beverage preparation unit (3) has a cooling unit for cooling a fluid which is supplied to the fluid supply (12).

## Revendications

1. Système (1) pour la préparation d'une boisson, en particulier d'une boisson fraîche, présentant une cartouche (2) qui présente un réservoir (6) rempli d'une substance pour boisson (7), et une unité de préparation de boisson (3) munie d'un logement de cartouche (10) dans lequel la cartouche (2) peut être insérée de manière réversible et d'un dispositif de déchargement de cartouche (34) qui provoque un transfert au moins partiel de la substance pour boisson (7) du réservoir (6) à une chambre de mélange (8), dans lequel l'unité de préparation de boisson (3) présente en outre une alimentation de fluide (12) qui débouche dans la chambre de mélange (8), **caractérisé en ce que** le logement de cartouche (10) présente un élément de complémentarité de forme supérieur (20, 21) qui maintient la cartouche (2) dans la zone de son côté entrée (4), et un élément de complémentarité de forme inférieur (20, 21), qui maintient la cartouche (2) dans la zone de son côté sortie (5) et/ou de la chambre de mélange (8), dans lequel le logement de cartouche (10) est réalisé de telle sorte que la cartouche (2) présente, entre l'élément de complémentarité de forme supérieur (20, 21) et l'élément de complémentarité de forme inférieur (20, 21), un diamètre qui est supérieur ou inférieur au diamètre dans la zone des éléments de complémentarité de forme supérieur et inférieur (20, 21).

2. Système (1) selon la revendication 1, dans lequel le dispositif de déchargement de cartouche (34) comprend une source d'air comprimé pour injecter de l'air comprimé dans le réservoir (6) sur un côté entrée (4) de la cartouche (2), dans lequel le système (1) est en particulier réalisé de telle sorte que, par l'air comprimé, la substance pour boisson (7) est expulsée directement du réservoir (6) ou que, par l'air comprimé, un piston (13) est transféré d'une position initiale à une position finale.

3. Système (1) selon l'une quelconque des revendications précédentes, dans lequel la chambre de mélange (8) présente une sortie de boisson (11) à travers laquelle la boisson formée par un mélange de la substance pour boisson (7) avec le fluide est délivrée, dans lequel le système (1) est de préférence réalisé de telle sorte que la boisson peut être introduite directement dans un récipient portable à partir de la sortie de boisson (11).

4. Système (1) selon l'une quelconque des revendications précédentes, dans lequel l'alimentation de fluide (12) est alimentée avec un fluide qui est refroidi par un groupe frigorifique, dans lequel le groupe frigorifique fait partie de l'unité de préparation de boisson (3) ou d'un réfrigérateur séparé en liaison active avec l'unité de préparation de boisson (3).

5. Système (1) selon l'une quelconque des revendications précédentes, dans lequel l'alimentation de fluide (12) est alimentée avec un fluide qui est gazéifié par un dispositif de gazéification.

6. Système (1) selon l'une quelconque des revendications précédentes, dans lequel la chambre de mélange (8) présente un raccord rapide (26) pour relier la chambre de mélange (8) à l'alimentation de fluide (12) lorsque la cartouche (2) est insérée dans le logement de cartouche (10).

7. Système (1) selon la revendication 6, dans lequel le raccord rapide (26) présente une tubulure d'accouplement et un logement d'accouplement recevant la tubulure d'accouplement à l'état accouplé, dans lequel la tubulure d'accouplement et/ou le logement d'accouplement comprennent un joint d'étanchéité et/ou dans lequel, à l'état accouplé, la tubulure d'accouplement s'engage par encliquetage dans le logement d'accouplement et/ou dans lequel la tubulure d'accouplement fait partie de l'unité de préparation de boisson (3) et le logement d'accouplement fait partie de la chambre de mélange (8).

8. Cartouche (2) pour un système (1) de production d'une boisson selon l'une quelconque des revendications précédentes, dans laquelle la cartouche (2) peut être insérée dans un logement de cartouche (10) d'une unité de préparation de boisson (3) du système selon l'une quelconque des revendications précédentes et dans laquelle la cartouche (2) présente un réservoir (6) qui est rempli d'une substance pour boisson (7), dans laquelle la cartouche (2) présente au moins un élément de liaison qui coopère avec le logement de cartouche (10) lors de l'insertion de la cartouche (2) dans l'unité de préparation de boisson (3) pour maintenir la cartouche (2) dans le logement de cartouche (10), dans laquelle la cartouche (2) présente un élément de complémentarité de forme supérieur dans la zone du côté entrée (4) et un élément de complémentarité de forme inférieur dans la zone du côté sortie (5) et/ou de la chambre de mélange (8), dans laquelle la cartouche (2) présente, dans une zone intermédiaire entre le côté entrée (4) et le côté sortie (5), un diamètre agrandi ou réduit par rapport au diamètre de la cartouche (2) dans la zone du côté entrée (4) et/ou du côté sortie (5).

9. Cartouche (2) selon la revendication 8, dans laquelle la cartouche (2) présente une chambre de mélange (8) qui peut être amenée en liaison fluidique avec une alimentation de fluide (12) de l'unité de préparation de boisson (3).

10. Cartouche (2) selon la revendication 9, dans laquelle la chambre de mélange (8) présente une sortie de boisson à travers laquelle la boisson formée par un mélange de la substance pour boisson (7) avec le fluide est délivrée, dans laquelle le système (1) est de préférence réalisé de telle sorte que la boisson peut être introduite directement dans un récipient portable à partir de la sortie de boisson.

11. Cartouche (2) selon l'une quelconque des revendications 8 à 10, dans laquelle la chambre de mélange (8) présente un raccord rapide (26) pour relier la chambre de mélange (8) à l'alimentation de fluide (12) .

12. Cartouche (2) selon les revendications 8 à 11, dans laquelle l'élément de liaison comprend un élément d'insertion qui s'engage dans un élément de complémentarité de forme (20, 21), en particulier sous la forme d'un élément à ressort et/ou à encliquetage (22) .

13. Cartouche (2) selon l'une quelconque des revendications 8 à 12, dans laquelle le diamètre de la cartouche (2) dans la zone du côté entrée (4) est essentiellement identique au diamètre de la cartouche (2) dans la zone de la chambre de mélange (8) et/ou du côté sortie (5).

14. Unité de préparation de boisson (3) pour un système (1) de production d'une boisson selon l'une quelconque des revendications 1 à 7, dans laquelle l'unité de préparation de boisson (3) présente le logement de cartouche (10) dans lequel la cartouche (2) selon l'une quelconque des revendications 8 à 13 peut être insérée de manière réversible, un dispositif de déchargement de cartouche (34), qui provoque un transfert au moins partiel de la substance pour boisson (7) du réservoir (6) à une chambre de mélange (8), et l'alimentation de fluide (12), qui débouche dans la chambre de mélange (8).

15. Unité de préparation de boisson (3) selon la revendication 14, l'unité de préparation de boisson (3) présente un groupe frigorifique pour refroidir un fluide qui est amené à l'alimentation de fluide (12).
